# EUROPÄISCHE PATENTANMELDUNG

(11) **EP 3 804 957 A1**
(43) Veröffentlichungstag der Anmeldung: **14.04.2021**
(21) Anmeldenummer: 20200375.2
(22) Anmeldetag: 06.10.2020
(51) Int. Cl.: B29C 49/06, B29C 49/48, B29K 67/00, B29K 71/00

(54) **VORRICHTUNG UND VERFAHREN ZUM UMFORMEN VON KUNSTSTOFFVORFORMLINGEN ZU KUNSTSTOFFBEHÄLTNISSEN UND BLASFORM**

(30) Priorität: 08.10.2019 DE 102019126948
(71) Anmelder: Krones AG, 93073 Neutraubling (DE)
(72) Erfinder: Kulzer, Markus, 93073 Neutraubling (DE); Söllner, Jürgen, 93073 Neutraubling (DE); Spitzer, Thomas, 93073 Neutraubling (DE)
(74) Vertreter: Bittner, Bernhard

(57) **Zusammenfassung**

Vorrichtung (1) zum Umformen von Kunststoffvorformlingen (10) zu Kunststoffbehältnissen (20) mit wenigstens einer Umformungsstation (8), welche eine Blasform (14) aufweist, innerhalb der die Kunststoffvorformlinge (10) durch Beaufschlagung mit einem fließfähigen und insbesondere gasförmigen Medium zu den Kunststoffbehältnissen (20) expandierbar sind, mit einer Beaufschlagungseinrichtung, welche die Kunststoffvorformlinge (10) zu deren Expansion mit dem fließfähigen Medium beaufschlagt, wobei die Blasform (14) mehrteilig aufgebaut ist und wenigstens ein erstes Seitenteil (14a) und ein zweites Seitenteil (14b) aufweist, welche bezüglich einander zum Öffnen und Schließen der Blasform bewegbar sind, wobei das erste Seitenteil (14a) und das zweite Seitenteil (14b) jeweils eine Innenwandung (52, 54) aufweisen, gegen welche die Kunststoffvorformlinge (10) expandierbar sind, wobei in einem geschlossenen Zustand der Blasform (14) zwischen den Seitenteilen (14a, 14b) ein Anlagebereich ausgebildet wird, in dem die beiden Seitenteile (14a, 14b) aneinander anliegen, wobei die Seitenteile (14a, 14b) in dem Anlagebereich eine Formtrennnaht (5) ausbilden. Erfindungsgemäß weist wenigstens ein Abschnitt wenigstens eines Seitenteils (14a, 14b) in einem Bereich der Formtrennnaht (5) eine Beschichtung und/oder ein Zusatzelement (60) auf, so dass an diesen wenigstens einen Abschnitt ein Wärmeübergang zwischen dem Kunststoffvorformling (10) und der Innenwandung (52, 54) in dem Anlagebereich zumindest stellenweise verzögerbar ist.

## Beschreibung

Die vorliegende Erfindung bezieht sich auf eine Vorrichtung und ein Verfahren zum Umformen von Kunststoffvorformlingen zu Kunststoffbehältnissen sowie auf eine Blasform zum Umformen von Kunststoffvorformlingen zu Kunststoffbehältnissen. Derartige Vorrichtungen und Verfahren sind aus dem Stand der Technik seit langem bekannt. Die Kunststoffvorformlinge werden dazu üblicherweise in eine Blasform einer Blasmaschine eingebracht. Innerhalb dieser Blasform werden die Kunststoffvorformlinge dann durch Beaufschlagung mit einem fließfähigen und insbesondere gasförmigen Medium, wie beispielsweise Druckluft, und durch Strecken mit einer Reckstange zu den Kunststoffbehältnissen umgeformt werden, indem die Kunststoffvorformlinge gegen die Innenwände der Blasform gedrückt werden. In jüngerer Zeit ist man dabei auch dazu übergegangen, anstelle des gasförmigen Mediums den Kunststoffvorformling gleich mit dem abzufüllenden flüssigen Produkt umzuformen.

Die erwähnte Blasform setzt sich dabei üblicherweise aus zwei Seitenteilen und einer Bodenform zusammen, welche im geschlossenen Zustand einen Hohlraum ausbilden, welcher formgebend für die herzustellenden Kunststoffbehältnisse ist und entsprechend eine Negativform der umzuformenden Kunststoffbehältnisse darstellt. Der Streckblasprozess besteht dabei üblicherweise aus mehreren Druckphasen, in denen die Kunststoffvorformlinge mit unterschiedlichen Drücken beaufschlagt werden, wobei sich die Höhe der einzelnen Drücke in den Druckphasen voneinander unterscheidet.

Insbesondere während der Hochdruckphase besteht dabei die Gefahr, dass es zu einer Verformung und/oder Bewegung der beiden Seitenteile der Blasform kommen kann, was zu einer Verschlechterung der sogenannten Parting-Line führen kann. Die Parting-Line entsteht dabei durch eine Formtrennnaht, an einem Anlagebereich, an dem sich die beiden Seitenteile in einem geschlossenen Zustand berühren, an dem fertigen Kunststoffbehältnis und ist als feine durchgehende Linie entlang der gesamten Längsrichtung des Behältnisses auf dem fertigen Kunststoffbehältnis sichtbar.

Speziell bei glattwandigen (ebenen, nicht gekrümmten Flächen) PET Behältern kann dabei die Verformung und/oder Bewegung der beiden Seitenteile der Blasform zu einem Einfallen der Parting-Line zum Flaschenmittelpunkt hinführen, wodurch die Behältnisse unrund bzw. unförmig wirken.

Der vorliegenden Erfindung liegt daher die Aufgabe zugrunde eine Vorrichtung und eine Verfahren bereitzustellen mittels welchem eine derartige Beeinträchtigung des Kunststoffbehältnisses während der Blasformung vermieden werden kann. Weiterhin liegt der vorliegenden Erfindung auch die Aufgabe zugrunde eine hierfür geeignete Blasform bereitzustellen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Umformen von Kunststoffvorformlingen zu Kunststoffbehältnissen gerichtet, mit wenigstens einer Umformungsstation, welche eine Blasform aufweist, innerhalb der die Kunststoffvorformlinge durch Beaufschlagung mit einem fließfähigen und insbesondere gasförmigen Medium zu den Kunststoffbehältnissen expandierbar sind. Weiterhin weist die Vorrichtung eine Beaufschlagungseinrichtung auf, welche die Kunststoffvorformlinge zu deren Expansion mit dem fließfähigen Medium beaufschlagt. Die Blasform ist dabei mehrteilig aufgebaut und weist wenigstens ein erstes Seitenteil und ein zweites Seitenteil auf, welche bezüglich einander zum Öffnen und Schließen der Blasform bewegbar sind, wobei das erste Seitenteil und das zweite Seitenteil jeweils eine Innenwandung aufweisen, gegen welche die Kunststoffvorformlinge expandierbar sind, wobei in einem geschlossenen Zustand der Blasform zwischen den Seitenteilen ein Anlagebereich ausgebildet wird, in dem die beiden Seitenteile aneinander anliegen, wobei die Seitenteile in dem Anlagebereich eine Formtrennnaht ausbilden.

Erfindungsgemäß weist wenigstens ein Abschnitt wenigstens eines Seitenteils in einem Bereich der Formtrennnaht eine Beschichtung und/oder ein Zusatzelement auf, so dass an diesen wenigstens einen Abschnitt ein Wärmeübergang zwischen dem Kunststoffvorformling und der Innenwandung in dem Anlagebereich zumindest stellenweise verzögerbar ist.

Es wird demnach erfindungsgemäß vorgeschlagen den Wärmeübergang an den Blasformen im Bereich der Trennebenen bzw. der Formtrennnaht (minimal) zu verzögern. Insbesondere wird dabei vorgeschlagen, den Wärmeübergang bei der Umformung von Kunststoffvorformlingen zu Kunststoffbehältnissen an dem Anlagebereich der Seitenteile zwischen dem Kunststoffvorformling und den Innenwandungen der Seitenteile durch das Aufbringen von speziellen Beschichtungen in diesem Bereich so zu verzögern, dass sich keine unterschiedlichen Spannungsverhältnisse innerhalb der Wandungen der Kunststoffbehältnisse abzeichnen können, welche zu einem Einfallen an der Parting-Line führen würden.

Durch das Verzögern des Wärmeübergangs an den Blasformen im Bereich der Formtrennnaht kann demnach eine qualitativ hochwertigere Parting-Line erreicht werden ohne, dass die Kühlwirkung insgesamt verschlechtert wird.

Insbesondere ist dabei durch die Beschichtung in wenigstens einem Abschnitt eines Seitenteils im Bereich der Formtrennnaht eine Abkühlung des umgeformten Kunststoffbehältnisses zumindest stellenweise verzögerbar und besonders bevorzugt gegenüber anderen Bereichen der Innenwandung der Seitenteile verzögerbar. Bei der Formtrennnaht handelt es sich dabei insbesondere auch um einen Formspalt, welchen die Seitenteile in einem geschlossenen Zustand der Blasform in dem Anlagebereich ausbilden.

Besonders bevorzugt weist dabei jeweils wenigstens ein Abschnitt beider Seitenteile in einem Bereich der Formtrennnaht eine Beschichtung auf, so dass an diesen jeweils wenigstens einen Abschnitt ein Wärmeübergang zwischen dem Kunststoffvorformling und der Innenwandung der Formtrennnaht zumindest stellenweise verzögerbar ist.

Auch wäre es denkbar anstatt der Beschichtung ein Zusatzelement, insbesondere Kunststoffelement in wenigstens einen Abschnitt der Innenwandung wenigstens eines Seitenteils und bevorzugt beider Seitenteile derart einzubringen, so dass in diesem Bereich ein Wärmeübergang zwischen dem Kunststoffvorformling und der Innenwandung in dem Anlagebereich zumindest stellenweise derart verzögerbar ist, so dass sich keine unterschiedlichen Spannungsverhältnisse innerhalb der Wandung des Kunststoffbehältnisses abzeichnen können.

Die vorliegende Erfindung ist daher auch auf eine Vorrichtung zum Umformen von Kunststoffvorformlingen zu Kunststoffbehältnissen der oben beschriebenen Art gerichtet, wobei erfindungsgemäß in wenigstens einem Abschnitt wenigstens eines Seitenteils in einem Bereich der Formtrennnaht ein Zusatzelement und insbesondere ein Kunststoffelement vorgesehen ist, so dass an diesen wenigstens einen Abschnitt ein Wärmeübergang zwischen dem Kunststoffvorformling und der Innenwandung in dem Anlagebereich und insbesondere eine Abkühlung des umgeformten Kunststoffbehältnisses zumindest stellenweise verzögerbar ist.

Bei der Vorrichtung zum Umformen von Kunststoffvorformlingen zu Kunststoffbehältnissen handelt es sich bevorzugt um eine Blasformmaschine bzw. eine Streckblasformmaschine. Bei einer vorteilhaften Ausführungsform ist eine Vielzahl von Umformungsstationen an einem gemeinsamen beweglichen Träger angeordnet. Bei diesem Träger handelt es sich dabei insbesondere um einen drehbaren Träger. Zur Beaufschlagung der Kunststoffvorformlinge weist die Vorrichtung bevorzugt eine Blasdüse auf, welche an eine Mündung der Kunststoffvorformlinge anlegbar ist, um die Kunststoffvorformlinge so mit Blasluft, oder mit einer Flüssigkeit, wie insbesondere einem abzufüllenden Getränk, zu beaufschlagen bzw. mittels Blasluft zu expandieren. Daneben ist bevorzugt auch eine Ventilanordnung vorgesehen, welche die Zuführung der Blasluft an die Kunststoffvorformlinge steuert.

Bei einer weiteren vorteilhaften Ausführungsform weisen die Umformungsstationen jeweils Reckstangen auf, welche die Kunststoffvorformlinge in ihrer Längsrichtung dehnen. Besonders bevorzugt ist die Blasmaschine bzw. sind der Träger und die Umformungsstationen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen befinden sich dabei bevorzugt außerhalb des Reinraums.

Die Umformungsstationen werden dabei bevorzugt innerhalb des Reinraums transportiert, wobei der Reinraum bevorzugt von mehreren Wandungen begrenzt wird. Bevorzugt wird der Reinraum dabei von wenigstens einer stehenden Wandung und einer sich gegenüber dieser stehenden Wandung bewegenden Wandung begrenzt. Dabei kann beispielsweise der Träger, an dem die Umformungsstationen bzw. Blasformen angeordnet sind, bereits eine dieser Wandungen und insbesondere die sich bewegende Wandung aufweisen bzw. ausbilden. Der Reinraum grenzt die Blasformen dabei insbesondere von einer unsterilen Umgebung ab.

Bevorzugt ist der Vorrichtung zum Umformen von Kunststoffvorformlingen zu Kunststoffbehältnissen eine Zuführeinrichtung vorgeordnet, um die Kunststoffvorformlinge den Umformungsstationen zuzuführen sowie bevorzugt eine Abführeinrichtung nachgeordnet, um die umgeformten Kunststoffbehältnisse aus den Umformungsstationen abzuführen. Besonders bevorzugt handelt es sich bei der Zuführeinrichtung und der Abführeinrichtung um Transporträder, Transportsterne oder dergleichen.

Die Blasform weist vorteilhaft wenigstens einen ersten Blasformträger und einen zweiten Blasformträger zur Aufnahme der Seitenteile auf, welche, bevorzugt parallel zur Längsachse der Blasform, zum Öffnen und Schließen der Blasformträger gegeneinander verschwenkbar sind. Bevorzugt bildet ein Innenraum der Blasform in einem geschlossenen Zustand einen Hohlraum aus, innerhalb dessen die Kunststoffvorformlinge zu den Kunststoffbehältnissen umformbar sind, wobei dieser Hohlraum bevorzugt einer Negativform der herzustellenden Kunststoffbehältnisse entspricht.

Weiter umfasst die Blasform bevorzugt neben dem ersten Seitenteil und dem zweiten Seitenteil auch ein Bodenteil, welches zur Ausbildung eines Standbereichs des umgeformten Kunststoffbehältnisses geeignet und bestimmt ist. Bevorzugt ist dabei auch ein Bodenträger zur Aufnahme des Bodenteils vorgesehen.

Stromaufwärts der Vorrichtung zum Umformen von Kunststoffvorformlingen zu Kunststoffbehältnissen ist bevorzugt eine Erwärmungseinrichtung zum Erwärmen der Kunststoffvorformlinge angeordnet, welche die Kunststoffvorformlinge bevorzugt auf eine für die Blasformung notwendige Temperatur erwärmt.

Bei einer bevorzugten Ausführungsform weist eine gesamte Innenwandung wenigstens eines Seitenteils eine Beschichtung auf, so dass an wenigstens einem Seitenteil ein Wärmeübergang zwischen dem Kunststoffvorformling und der Innenwandung in dem Anlagebereich zumindest stellenweise verzögerbar ist. Besonders bevorzugt ist die gesamte Innenwandung beider Seitenteile mit einer Beschichtung versehen, so dass ein Wärmeübergang zwischen dem Kunststoffvorformling und der Innenwandung in dem Anlagebereich zumindest stellenweise verzögerbar ist. Dabei wäre es bevorzugt auch denkbar, auch das Bodenteil mit einer derartigen Beschichtung zu versehen.

Vor dem Beschichtungsprozess ist es dabei erforderlich das Seitenteil bzw. die Seitenteile einer speziellen Behandlung zu unterziehen, um sicherzustellen, dass die Beschichtung auf den Innwandungen der Seitenteile haftet. Insbesondere ist es dabei erforderlich die Seitenteile thermisch oder chemisch zu entfetten und von Oxidschichten zu befreien. Um die Haftung der Beschichtung weiter zu erhöhen können die Seitenteile bevorzugt weiter einer Sandstrahlung unterzogen werden. Das Aushärten der aufgebrachten Beschichtung erfolgt bevorzugt durch einen Sinterprozess.

Bei einer weiteren bevorzugten Ausführungsform weist die Umformungsstation einen Verriegelungsmechanismus zum Verriegeln der Blasform und insbesondere der Seitenteile der Blasform auf. Besonders bevorzugt werden durch den Verriegelungsmechanismus die Seitenteile und das Bodenteil der Blasform miteinander verriegelt bzw. sind mittels des Verriegelungsmechanismus die Seitenteile und das Bodenteil der Blasform miteinander verriegelbar. Der Umformungsprozess findet dabei besonders bevorzugt in einem verriegelten Zustand der Blasform bzw. der Umformungsstation statt. Vorteilhaft wird der Verriegelungsmechanismus nach der Abkühlung des umgeformten Kunststoffbehältnisses wieder geöffnet, so dass das fertige Kunststoffbehältnis aus der Blasform entnommen werden kann.

Die Beschichtung ist in einer bevorzugten Ausführungsform mit einem Sol-Gel Verfahren hergestellt. Bei einer weiteren bevorzugten Ausführungsform enthält die Beschichtung PEEK (Polyetheretherketon) und besonders bevorzugt PEEK und bestimmte Additive, welche die Eigenschaften der beschichteten Oberfläche in gewünschter Weise beeinflussen.

Besonders bevorzugt wird an wenigstens einem Abschnitt wenigstens eines Seitenteils demnach eine Beschichtung oder eine Lackierung oder ein Kunststoffelement angebracht, durch welche ein Wärmeübergang zwischen dem Kunststoffvorformling und der Innenwandung bzw. eine Abkühlung des umgeformten Kunststoffbehältnisses in dem Anlagebereich zumindest stellenweise verzögert werden kann.

Vorteilhaft kann dabei auch das Kunststoffelement mit der Beschichtung und/oder der Lackierung kombiniert werden, so dass an wenigstens einem Abschnitt wenigstens eines Seitenteils eine Beschichtung und/oder Lackierung und ein Kunststoffelement angebracht wird, durch welche/durch welches ein Wärmeübergang zwischen dem Kunststoffvorformling und der Innenwandung bzw. eine Abkühlung des umgeformten Kunststoffbehältnisses in dem Anlagebereich zumindest stellenweise verzögert werden kann.

Bei einer weiteren bevorzugten Ausführungsform ist die Umformungsstation druckkissenlos ausgebildet. Die Seitenteile der Blasform bzw. der Umformungsstation werden demnach lediglich durch die Schwenkbewegung aufeinander zu und den Verriegelungsmechanismus zusammengepresst und hierdurch zusammengehalten.

In einer bevorzugten Ausführungsform weist die Beschichtung eine Schichtdicke auf, die größer ist als 10 µm, bevorzugt größer als 20 µm und besonders bevorzugt größer als 30 µm und/oder die Beschichtung weist eine Schichtdicke auf, die kleiner ist als 100 µm, bevorzugt kleiner als 80 µm, bevorzugt kleiner als 60 µm.

Vorteilhaft liegt die Einsatztemperatur der Seitenteile nach der Beschichtung bei einer Temperatur die größer ist als - 50 °C, bevorzugt größer als 30 °C, bevorzugt größer als 100 °C und besonders bevorzugt größer als 200 °C und/oder die Temperatur liegt bei kleiner 400 °C, bevorzugt kleiner 350 °C und besonders bevorzugt bei kleiner 280 °C. Besonders bevorzugt liegt die Einsatztemperatur der Seitenteile nach der Beschichtung in einem Bereich zwischen -40 °C und 260°C.

Bei einer weiteren vorteilhaften Ausführungsform ist die Beschichtung eine lebensmittelverträgliche Beschichtung und/oder eine lösungsmittelbeständige Beschichtung. Bevorzugt ist die Beschichtung nicht-haftend gegenüber Kunststoffen ausgebildet. Besonders bevorzugt ist die Beschichtung daher eine lebensmittelverträgliche und/oder eine lösungsmittelbeständige Beschichtung und derart beschaffen, so dass sie nicht-haftend gegenüber Kunststoffen ist.

Die vorliegende Erfindung ist weiterhin auf eine Blasform zum Umformen von Kunststoffvorformlingen zu Kunststoffbehältnissen gerichtet, wobei die Blasform mehrteilig aufgebaut ist und wenigstens ein erstes Seitenteil und ein zweites Seitenteil aufweist, welche bezüglich einander zum Öffnen und Schließen der Blasform bewegbar sind, wobei das erste Seitenteil und das zweite Seitenteil jeweils eine Innenwandung aufweisen, gegen welche die Kunststoffvorformlinge expandierbar sind, wobei in einem geschlossenen Zustand der Blasform zwischen den Seitenteilen ein Anlagebereich ausgebildet wird, in dem die beiden Seitenteile aneinander anliegen, wobei die Seitenteile in dem Anlagebereich eine Formtrennnaht ausbilden.

Erfindungsgemäß weist wenigstens ein Abschnitt wenigstens eines Seitenteils in einem Bereich der Formtrennnaht eine Beschichtung und/oder ein Zusatzelement, wie insbesondere ein Kunststoffelement, auf, so dass an diesen wenigstens einen Abschnitt ein Wärmeübergang zwischen dem Kunststoffvorformling und der Innenwandung in dem Anlagebereich zumindest stellenweise verzögerbar ist.

Es wird demnach auch eine Blasform vorgeschlagen, welche derart mit einer Beschichtung und/oder einem Zusatzelement versehen ist, so dass ein Wärmeübergang an den Blasformen im Bereich des Anlagebereichs bzw. der Formtrennnaht verzögert wird, so dass insbesondere ein Einfallen der Parting-Line an dem umgeformten Kunststoffbehältnis verhindert wird.

Zudem ist die vorliegende Erfindung auch auf ein Verfahren zum Umformen von Kunststoffvorformlingen zu Kunststoffbehältnissen gerichtet, mit wenigstens einer Umformungsstation, welche eine Blasform aufweist, innerhalb der die Kunststoffvorformlinge durch Beaufschlagung mit einem fließfähigen und insbesondere gasförmigen Medium zu den Kunststoffbehältnissen expandiert werden, mit einer Beaufschlagungseinrichtung, welche die Kunststoffvorformlinge zu deren Expansion mit dem fließfähigen Medium beaufschlagt, wobei die Blasform mehrteilig aufgebaut ist und wenigstens ein erstes Seitenteil und ein zweites Seitenteil aufweist, welche bezüglich einander zum Öffnen und Schließen der Blasform bewegbar sind.

Das erste Seitenteil und das zweite Seitenteil weisen dabei jeweils eine Innenwandung auf, gegen welche die Kunststoffvorformlinge expandiert werden, wobei in einem geschlossenen Zustand der Blasform zwischen den Seitenteilen ein Anlagebereich ausgebildet wird, in dem die beiden Seitenteile aneinander anliegen, wobei die Seitenteile in dem Anlagebereich eine Formtrennnaht ausbilden. Bevorzugt verläuft diese Formtrennnaht geradlinig und erstreckt sich insbesondere in bzw. entlang der (vertikalen) Längsrichtung der Blasform, in aufrecht stehender Position der Blasform.

Erfindungsgemäß weist wenigstens ein Abschnitt wenigstens eines Seitenteils in einem Bereich der Formtrennnaht eine Beschichtung und/oder ein Zusatzelement, wie insbesondere ein Kunststoffelement, auf, so dass an diesen wenigstens einen Abschnitt ein Wärmeübergang zwischen dem Kunststoffvorformling und der Innenwandung in dem Anlagebereich zumindest stellenweise verzögert wird.

Es wird demnach auch verfahrensseitig vorgeschlagen wenigstens einen Abschnitt einer Innenwandung eines Seitenteils im Bereich der Formtrennnaht mit einer Beschichtung zu versehen, so dass ein Wärmeübergang an den Blasformen im Bereich des Anlagebereichs bzw. der Formtrennnaht verzögert wird, so dass insbesondere ein Einfallen der Parting-Line an dem umgeformten Kunststoffbehältnis verhindert wird.

Weitere Vorteile und Ausführungsformen ergeben sich aus den beigefügten Zeichnungen. Darin zeigt:
- Fig. 1: eine schematische Darstellung einer erfindungsgemäßen Vorrichtung zum Umformen von Kunststoffvorformlingen zu Kunststoffbehältnissen;
- Fig. 2: eine erste erfindungsgemäße Ausführungsform eines Seitenteils einer Blasform mit Beschichtung; und
- Fig. 3: eine zweite erfindungsgemäße Ausführungsform eines Seitenteils einer Blasform mit Kunststoffelement.

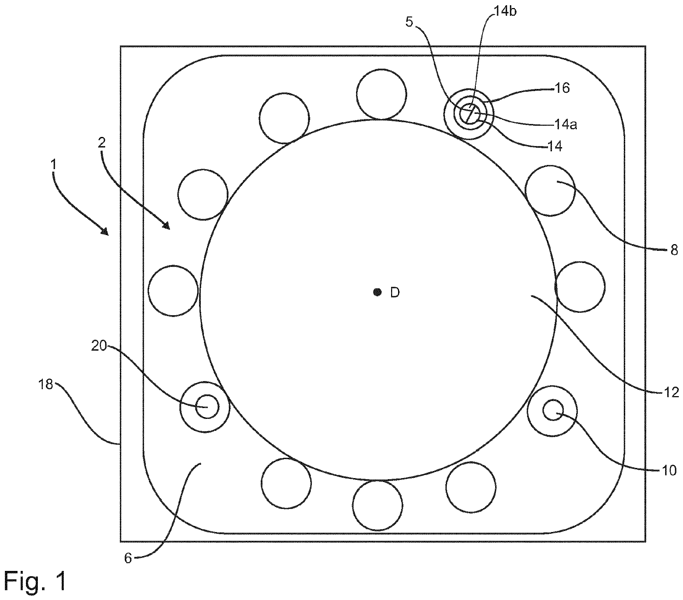

Figur 1 zeigt eine schematische Darstellung einer Vorrichtung 1 zum Umformen von Kunststoffvorformlingen 10 zu Kunststoffbehältnissen 20. Dabei werden die Kunststoffvorformlinge 10 den einzelnen Umformungsstationen 8 zugeführt und, bevorzugt während sie von einer Transporteinrichtung 2 transportiert werden, zu Kunststoffbehältnissen 20 expandiert. Nach dieser Expansion werden die Kunststoffbehältnisse 20 wieder aus der Vorrichtung 1 entnommen. Zu diesem Zweck kann ein (nicht gezeigter) Zuführstern vorgesehen sein, der die Kunststoffvorformlinge der Vorrichtung 1 zuführt, sowie eine (ebenfalls nicht gezeigte) Abführeinrichtung, insbesondere ebenfalls ein Transportstern, der die fertiggestellten Kunststoffbehältnisse 20 wieder von der Vorrichtung abführt.

Die Vorrichtung 1 weist einen Stationsträger 12 auf, an dem eine Vielzahl von Umformungsstationen 8 angeordnet ist. Dieser Stationsträger kann dabei beispielsweise, wie in Figur 1 gezeigt, ein Blasrad sein, welches bezüglich einer Drehachse D (welche hier senkrecht zu der Figurenebene und damit vertikal verläuft) drehbar ist. Jede einzelne Umformungsstation 8 weist dabei jeweils eine Blasform 14 auf, welche sich bevorzugt aus zwei Seitenteilen 14a, 14b und einer (nicht dargestellten) Bodenform zusammensetzt. Die Blasformen 14 sind dabei an Blasformträgern 16 angeordnet und können von diesen entnommen bzw. an diesen angeordnet werden.

Das Bezugszeichen 6 kennzeichnet einen Basisträger, an dem der Stationsträger 12 drehbar gelagert ist. Das Bezugszeichen 18 kennzeichnet ein Gehäuse, welches zumindest teilweise den Stationsträger 12 umgibt. Bevorzugt trennt das Gehäuse 18 seinen Innenraum, der als Steril- bzw. Reinraum ausgebildet ist, von einer normalen Atmosphäre ab.

Das Bezugszeichen 5 bezieht sich auf eine Formtrennnaht, welche in einem geschlossenen Zustand der Blasform 14 zwischen den Seitenteilen 14a und 14b ausgebildet wird und als sogenannte Parting-Line auf dem umgeformten Kunststoffbehältnis 20 sichtbar ist.

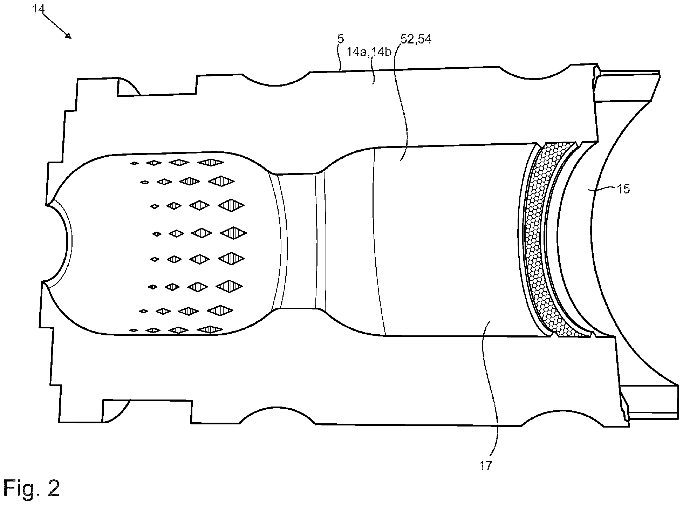

Figur 2 zeigt eine erste erfindungsgemäße Ausführungsform eines Seitenteils 14a, 14b einer Blasform mit Beschichtung. In dieser Ausführungsform ist die gesamte Innenwandung 52, 54 des Seitenteils 14a, 14b mit einer Beschichtung versehen. Wie oben beschrieben, wäre es allerdings auch denkbar, dass lediglich ein Abschnitt dieser Innenwandung 52, 54 insbesondere im Bereich eines Anlagebereichs, an dem sich bei geschlossenen Zustand beide Seitenteile berühren und eine Formtrennnaht 5 ausbilden, beschichtet ist.

Durch die Kontur der Innenwandung 52, 54 wird im geschlossenen Zustand der Seitenteile 14a, 14b zudem ein Hohlraum 17 im Inneren der Blasform ausgebildet, welcher insbesondere einer Negativform des umzuformenden Kunststoffbehältnisses entspricht. Das Bezugszeichen 15 kennzeichnet einen Abschnitt, in welchen eine (nicht dargestellte) Bodenform angeordnet bzw. eingehängt wird.

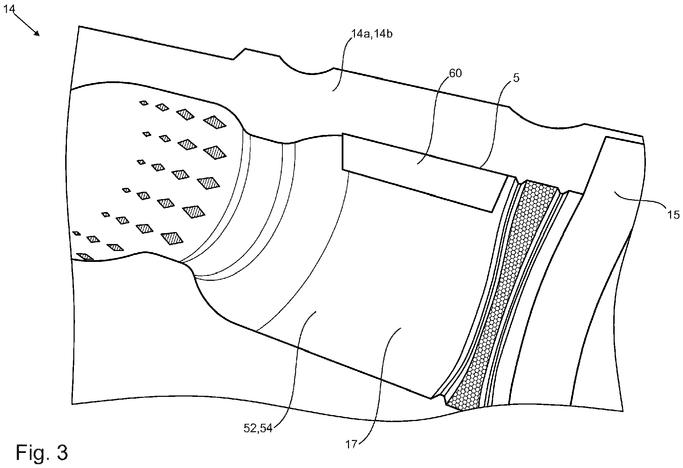

Figur 3 zeigt eine zweite erfindungsgemäße Ausführungsform eines Seitenteils 14a, 14b einer Blasform mit einem Kunststoffelement 60. Das Kunststoffelement bzw. Zusatzelement 60 ist dabei an einem Abschnitt der Innenwandung 52, 54 des Seitenteils 14a, 14b in einem Bereich angeordnet, welcher zusammen mit dem zweiten Seitenteil in einem geschlossenen Zustand der Blasform eine Formtrennnaht 5 ausbildet.

Durch die Kontur der Innenwandung 52, 54 wird dabei in einem geschlossen Zustand der Seitenteile wiederum ein Hohlraum 17 ausgebildet, welcher einer Negativform des umzuformenden Kunststoffbehältnisses entspricht. Das Bezugszeichen 15 kennzeichnet wieder den Abschnitt 15 in dem eine (nicht dargestellte) Bodenform angeordnet bzw. eingehängt wird.

Dabei wäre es bevorzugt auch denkbar, dass die Beschichtung gemäß der Figur 2 sowie das Kunststoffelement gemäß der Figur 3 auch in Kombination verwendet werden und demnach wenigstens ein Seitenteil 14a, 14b einer Blasform in wenigstens einem ersten Abschnitt eine erfindungsgemäße Beschichtung aufweist und in wenigstens einem zweiten Abschnitt, der sich von dem ersten Abschnitt unterscheidet, ein erfindungsgemäßes Kunststoffelement aufweist.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Transporteinrichtung
- 5: Formtrennnaht
- 6: Basisträger
- 8: Umformungsstation
- 10: Kunststoffvorformling
- 12: Stationsträger
- 14: Blasform
- 14a: erstes Seitenteil
- 14b: zweites Seitenteil
- 15: Abschnitt
- 16: Blasformträger
- 17: Hohlraum
- 18: Gehäuse
- 20: Kunststoffbehältnis
- 52: Innenwandung des ersten Seitenteils 14a
- 54: Innenwandung des zweiten Seitenteils 14b
- 60: Kunststoffelement, Zusatzelement

- D: Drehachse

## Patentansprüche

1. Vorrichtung (1) zum Umformen von Kunststoffvorformlingen (10) zu Kunststoffbehältnissen (20) mit wenigstens einer Umformungsstation (8), welche eine Blasform (14) aufweist, innerhalb der die Kunststoffvorformlinge (10) durch Beaufschlagung mit einem fließfähigen und insbesondere gasförmigen Medium zu den Kunststoffbehältnissen (20) expandierbar sind, mit einer Beaufschlagungseinrichtung, welche die Kunststoffvorformlinge (10) zu deren Expansion mit dem fließfähigen Medium beaufschlagt, wobei die Blasform (14) mehrteilig aufgebaut ist und wenigstens ein erstes Seitenteil (14a) und ein zweites Seitenteil (14b) aufweist, welche bezüglich einander zum Öffnen und Schließen der Blasform bewegbar sind, wobei das erste Seitenteil (14a) und das zweite Seitenteil (14b) jeweils eine Innenwandung (52, 54) aufweisen, gegen welche die Kunststoffvorformlinge (10) expandierbar sind, wobei in einem geschlossenen Zustand der Blasform (14) zwischen den Seitenteilen (14a, 14b) ein Anlagebereich ausgebildet wird, in dem die beiden Seitenteile (14a, 14b) aneinander anliegen, wobei die Seitenteile (14a, 14b) in dem Anlagebereich eine Formtrennnaht (5) ausbilden,
**dadurch gekennzeichnet, dass**
wenigstens ein Abschnitt wenigstens eines Seitenteils (14a, 14b) in einem Bereich der Formtrennnaht (5) eine Beschichtung und/oder ein Zusatzelement (60) aufweist, so dass an diesen wenigstens einen Abschnitt ein Wärmeübergang zwischen dem Kunststoffvorformling (10) und der Innenwandung (52, 54) in dem Anlagebereich zumindest stellenweise verzögerbar ist.

2. Vorrichtung (1) nach Anspruch 1,
**dadurch gekennzeichnet, dass**
eine gesamte Innenwandung (52, 54) wenigstens eines Seitenteils (14a, 14b) eine Beschichtung aufweist.

3. Vorrichtung (1) nach wenigstens einem der vorhergehenden Ansprüche,
**dadurch gekennzeichnet, dass**
die Umformungsstation (8) einen Verriegelungsmechanismus zum Verriegeln der Blasform (14) und insbesondere der Seitenteile (14a, 14b) der Blasform (14) aufweist.

4. Vorrichtung (1) nach wenigstens einem der vorhergehenden Ansprüche,
**dadurch gekennzeichnet, dass**
die Beschichtung mit einem Sol-Gel Verfahren hergestellt ist.

5. Vorrichtung (1) nach wenigstens einem der vorhergehenden Ansprüche,
**dadurch gekennzeichnet, dass**
die Beschichtung PEEK enthält.

6. Vorrichtung (1) nach wenigstens einem der vorhergehenden Ansprüche,
**dadurch gekennzeichnet, dass**
die Umformungsstation (8) druckkissenlos ausgebildet ist.

7. Vorrichtung (1) nach wenigstens einem der vorhergehenden Ansprüche,
**dadurch gekennzeichnet, dass**
die Beschichtung eine Schichtdicke aufweist, die größer ist als 10 µm, bevorzugt größer als 20 µm und besonders bevorzugt größer als 30 µm und/oder dass die Beschichtung eine Schichtdicke aufweist, die kleiner ist als 100 µm, bevorzugt kleiner als 80 µm, bevorzugt kleiner als 60 µm.

8. Vorrichtung (1) nach wenigstens einem der vorhergehenden Ansprüche,
**dadurch gekennzeichnet, dass**
die Beschichtung eine lebensmittelverträgliche Beschichtung und/oder eine lösungsmittelbeständige Beschichtung ist.

9. Vorrichtung (1) nach wenigstens einem der vorhergehenden Ansprüche,
**dadurch gekennzeichnet, dass**
die Beschichtung nicht-haftend gegenüber Kunststoffen ausgebildet ist.

10. Blasform (14) zum Umformen von Kunststoffvorformlingen (10) zu Kunststoffbehältnissen (20), wobei die Blasform (14) mehrteilig aufgebaut ist und wenigstens ein erstes Seitenteil (14a) und ein zweites Seitenteil (14b) aufweist, welche bezüglich einander zum Öffnen und Schließen der Blasform (14) bewegbar sind, wobei das erste Seitenteil (14a) und das zweite Seitenteil (14b) jeweils eine Innenwandung (52, 54) aufweisen, gegen welche die Kunststoffvorformlinge (10) expandierbar sind, wobei in einem geschlossenen Zustand der Blasform (14) zwischen den Seitenteilen (14a, 14b) ein Anlagebereich ausgebildet wird, in dem die beiden Seitenteile (14a, 14b) aneinander anliegen, wobei die Seitenteile (14a, 14b) in dem Anlagebereich eine Formtrennnaht (5) ausbilden,
**dadurch gekennzeichnet, dass**
wenigstens ein Abschnitt wenigstens eines Seitenteils (14a, 14b) in einem Bereich der Formtrennnaht (5) eine Beschichtung und/oder ein Zusatzelement (60) aufweist, so dass an diesen wenigstens einen Abschnitt ein Wärmeübergang zwischen dem Kunststoffvorformling (10) und der Innenwandung (52, 54) in dem Anlagebereich zumindest stellenweise verzögerbar ist.

11. Verfahren zum Umformen von Kunststoffvorformlingen (10) zu Kunststoffbehältnissen (20) mit wenigstens einer Umformungsstation (8), welche eine Blasform (14) aufweist, innerhalb der die Kunststoffvorformlinge (10) durch Beaufschlagung mit einem fließfähigen und insbesondere gasförmigen Medium zu den Kunststoffbehältnissen (20) expandiert werden, mit einer Beaufschlagungseinrichtung, welche die Kunststoffvorformlinge (10) zu deren Expansion mit dem fließfähigen Medium beaufschlagt, wobei die Blasform (14) mehrteilig aufgebaut ist und wenigstens ein erstes Seitenteil (14a) und ein zweites Seitenteil (14b) aufweist, welche bezüglich einander zum Öffnen und Schließen der Blasform (14) bewegbar sind, wobei das erste Seitenteil (14a) und das zweite Seitenteil (14b) jeweils eine Innenwandung (52, 54) aufweisen, gegen welche die Kunststoffvorformlinge (10) expandiert werden, wobei in einem geschlossenen Zustand der Blasform (14) zwischen den Seitenteilen (14a, 14b) ein Anlagebereich ausgebildet wird, in dem die beiden Seitenteile (14a, 14b) aneinander anliegen, wobei die Seitenteile (14a, 14b) in dem Anlagebereich eine Formtrennnaht (5) ausbilden,
**dadurch gekennzeichnet, dass**
wenigstens ein Abschnitt wenigstens eines Seitenteils (14a, 14b) in einem Bereich der Formtrennnaht (5) eine Beschichtung und/oder ein Zusatzelement (60) aufweist, so dass an diesen wenigstens einen Abschnitt ein Wärmeübergang zwischen dem Kunststoffvorformling (10) und der Innenwandung (52, 54) in dem Anlagebereich zumindest stellenweise verzögert wird.
